(19) Europäisches Patentamt
European Patent Office
Office européen des brevets

(11) EP 3 569 405 A1

(12) EUROPÄISCHE PATENTANMELDUNG

(43) Veröffentlichungstag:
**20.11.2019 Patentblatt 2019/47**

(21) Anmeldenummer: **18173378.3**

(22) Anmeldetag: **18.05.2018**

(51) Int Cl.:
***B32B 7/12*** *(2006.01)* ***B32B 15/08*** *(2006.01)*
***B32B 15/092*** *(2006.01)* ***B32B 15/18*** *(2006.01)*
***B32B 27/26*** *(2006.01)* ***B32B 27/38*** *(2006.01)*
***B32B 37/06*** *(2006.01)* ***B32B 37/12*** *(2006.01)*
***B32B 37/18*** *(2006.01)* ***H01F 1/18*** *(2006.01)*
***H01F 3/02*** *(2006.01)* ***H01F 41/02*** *(2006.01)*
***H02K 1/04*** *(2006.01)* ***H02K 15/12*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **voestalpine Stahl GmbH**
**4020 Linz (AT)**

(72) Erfinder:
- **Fluch, Ronald**
  **4020 Linz (AT)**
- **Keppert, Timothy**
  **4020 Linz (AT)**

(74) Vertreter: **Jell, Friedrich**
**Bismarckstrasse 9**
**4020 Linz (AT)**

(54) **ELEKTROBAND ODER -BLECH, VERFAHREN ZUR HERSTELLUNG SOLCH EINES ELEKTROBANDS ODER -BLECHS SOWIE BLECHPAKET DARAUS**

(57) Es wird ein Elektroband oder -blech mit wenigstens einer auf einer seiner Flachseiten vorgesehenen, thermohärtbaren wasserbasierten Schmelzklebelackschicht, ein Verfahren zur Herstellung solch eines Elektrobands oder -blechs sowie ein Blechpaket daraus gezeigt. Um beim Backprozess eine erhöhte Schmelzviskosität aufweisen zu können, wird vorgeschlagen, dass die thermohärtbare wasserbasierte Schmelzklebelackschicht zusätzlich einen mit dem Epoxidharz oder der Epoxidharzmischung verbindenden Vorvernetzer aufweist, wobei der Vorvernetzer ein organisches Amin mit mindestens drei Aminogruppen oder eine Mischung solcher organischer Amine ist.

EP 3 569 405 A1

## Beschreibung

Die Erfindung betrifft ein Elektroband oder -blech mit wenigstens einer auf einer seiner Flachseiten vorgesehenen, thermohärtbaren wasserbasierten Schmelzklebelackschicht, ein Verfahren zur Herstellung solch eines Elektrobands oder -blechs sowie ein Blechpaket daraus.

Aus dem Stand der Technik sind zahlreiche Verfahren zur Klebstoffbeschichtung der Oberfläche eines Elektrobands oder -blechs bekannt, um daraus abgetrennte Blechteile stoffschlüssig zu einem Blechpaket verkleben zu können. Beispielsweise werden Elektrobänder bzw. -bleche mit thermohärtbarem Schmelzklebelack, das heißt, einem reaktiven Klebstoffsystem mit Schmelzklebstoff - auch als Backlack bezeichnet - beschichtet (WO 2014/089593 A1). Nach dem Trocknen, also dem Entfernen von Lösungsmittel aus der thermohärtbaren Schmelzklebelackschicht werden die abgetrennten Blechteile aus solch einem beschichteten Elektroband bzw. -blech übereinandergestapelt und durch einen sogenannten Backprozess zunächst zum Verkleben und dann zum Aushärten gebracht - das heißt, über die Parameter Druck, Temperatur und Zeit miteinander stoffschlüssig zu Paketen verbunden.

Um hochfeste Blechpakete mit hervorragenden magnetischen Eigenschaften zu erhalten, gilt es, Klebefähigkeit bzw. -zustand des Schmelzklebelacks möglichst konstant einzustellen bzw. stabil zu halten - und zwar vor dessen Aufbringen auf das Elektroband oder -blech bis zum Trocknen bzw. bis zum Endaushärten, also bis zum Backprozess. Verfahrenstechnisch problematisch erweist sich nicht zuletzt das stoffschlüssige Verbinden, da hierbei von wesentlicher Bedeutung ist, einen Austritt von Backlack während des Backprozesses zu vermeiden.

Die Erfindung hat sich daher die Aufgabe gestellt, ausgehend vom eingangs geschilderten Stand der Technik, ein Elektroband oder -blech mit wenigstens einer auf einer seiner Flachseiten vorgesehenen, thermohärtbaren wasserbasierten Schmelzklebelackschicht zur Verfügung zu stellen, welche während dem Backprozess eine erhöhte Schmelzviskosität aufweist.

Die Erfindung löst die gestellte Aufgabe hinsichtlich des Elektrobands oder -blechs anhand der Merkmale des Anspruchs 1.

Weist die thermohärtbare wasserbasierte Schmelzklebelackschicht zusätzlich einen mit dem Epoxidharz oder der Epoxidharzmischung, insbesondere bereits bei Raumtemperatur, verbindenden Vorvernetzer auf, wobei der Vorvernetzer ein organisches Amin mit mindestens drei Aminogruppen oder eine Mischung solcher organischer Amine ist, kann ein besonderer Zustand der Schmelzklebelackschicht eingestellt werden. Dies gilt insbesondere auch für organischer Amine, welche mindestens drei primäre Aminogruppen aufweisen. Durch eine Vorvernetzung mithilfe derartiger organischer Amine, also der Reaktion der Aminogruppen mit reaktiven Epoxidgruppen unterschiedlicher Epoxidharzmoleküle des Epoxidharzes zu sekundären und/oder tertiären Aminen, ergeben sich vergleichsweise voluminöse Verbindungen in der thermohärtbaren wasserbasierten Schmelzklebelackschicht. Diese erfindungsgemäße Vorvernetzung kann mithilfe organischer Amine mit mindestens drei Aminogruppen derart eingestellt werden, dass sich die Schmelzviskosität der thermohärtbaren Schmelzklebelackschicht erhöht - und somit ein Ausfließen des Schmelzklebelacks während einem stoffschlüssigen Verbinden, etwa mit Blechteilen zu einem Blechpaket im Zuge eines Backprozesses, verhindert werden kann. Dies jedoch, ohne die Klebefähigkeit der Schmelzklebelackschicht bzw. deren Haftfestigkeit auf dem Elektroband oder - blech zu beeinträchtigen. Auch die Stabilität der Dispersion des wasserbasierten Schmelzklebelacks während seiner Lagerung bei Raumtemperatur sowie bei dessen weiteren Handhabung, also Aufbringen auf das Elektroband oder -blech bzw. folgende Trocknung der aufgebrachten Schmelzklebelackschicht usw. kann gewährleistet bleiben.

Eine Vereinfachung in der Einstellung der Mengenverhältnisse von Epoxidharz oder Epoxidharzmischung und Vorvernetzer ist erreichbar, wenn die mindestens drei Aminogruppen des Vorvernetzers jeweils primäre Aminogruppen sind. Somit kann nämlich von einer im Wesentlichen einheitlichen Reaktivität der Aminogruppen des Vorvernetzers ausgegangen werden, was die Einstellung des Zustands der Schmelzklebelackschicht für dessen gewünschte Eigenschaften auf dem Elektroband oder - blech erleichtert.

Besonders vorteilhaft kann sich zudem herausstellen, wenn die Gew.-% von Vorvernetzer und Epoxidharz oder Epoxidharzmischung in der wasserbasierten thermohärtbaren Schmelzklebelackschicht folgende Relation erfüllen:

$$\text{Gew.-\% Vorvernetzer} =$$

$$\frac{\begin{array}{c}\text{Gew. \% Epoxidharz oder}\\ \text{der Epoxidharzmischung}\end{array}}{\begin{array}{c}\text{mittlere M des Epoxidharzes oder}\\ \text{der Epoxidharzmischung}\end{array}} * \frac{\text{mittlere M des Vorvernetzers}}{\begin{array}{c}\text{X} * \text{mittlere Anzahl der Aminogruppen der}\\ \text{Vorvernetzermoleküle}\end{array}}$$

wobei X für eine Zahl von 1,6 bis 28,9, insbesondere 2,1 bis 19,4, insbesondere 2,9 bis 7,2, und M für molare Masse steht. Es kann davon ausgegangen werden, dass die zumindest überwiegende Zahl der primären Aminogruppen des Vorvernetzers jeweils mit unterschiedlichen Epoxidharzmolekülen zu sekundären bzw. mehrheitlich tertiären Aminen verbinden. Durch die derartige Bildung von Polymeren kommt es zu einer Molmassenvergrößerung - wobei dieses erfindungsgemäße Verhältnis von Aminogruppen und Epoxidgruppen ideal ist, um einen Grad an Vorvernetzung zu erreichen, welcher weiträumig genug ist, kein Gelieren des wasserbasierten Schmelzklebelacks zu verursachen.
Somit wird die Stabilität der Dispersion bei Raumtemperatur nicht gefährdet. Besonders dieser Effekt, welcher eine bei Raumtemperatur lange Lagerstabilität bedeutet, konnte in überraschend hohem Ausmaß erreicht werden - was wiederum eine sehr einfache Handhabung des Schmelzklebelacks beim Aufbringen der Schmelzklebelackschicht bzw. bei einem folgenden Trocknen auf dem Elektroband oder -blech bedeuten kann, sowie vorteilhafte Eigenschaften wie erhöhte Antrocknungsgeschwindigkeit der Schmelzklebelackschicht auf dem Elektroband oder -blech samt hoher Härte bei gleichzeitig sehr guter Elastizität nach sich ziehen kann. Besonders kann sich die Erfindung vor allem auch hinsichtlich der weiteren Verwendung des derart beschichteten Elektrobands oder -blechs auszeichnen. Die Schmelzviskosität des Schmelzklebelacks auf dem Elektroband oder -blech ist mithilfe des Vorvernetzers nämlich vorteilhaft beeinflussbar, nämlich erhöhbar - womit die Gefahr des Ausfließens im Backprozess stoffschlüssig zu verbindender, beschichteter Elektrobänder oder -bleche bzw. daraus hergestellter Blechteile reduziert werden kann. Dies gelingt mithilfe der erfindungsgemäßen Relation der Gew.-% von Vorvernetzer und Epoxidharz oder Epoxidharzmischung in der wasserbasierten thermohärtbaren Schmelzklebelackschicht - und zwar in überraschender Weise, da keine nachteilige Beeinflussung hinsichtlich der Stabilität und Dispersion bzw. hinsichtlich der Handhabung des Schmelzklebelacks, z. B. beim Aufbringen der Schmelzklebelackschicht, in Kauf genommen werden muss. Derart ist es also unter anderem möglich, hochfeste Blechpakete mit hervorragenden magnetischen Eigenschaften zu erhalten.

Als Vorvernetzer kann sich ein organisches Triamin besonders eignen, da solch eines vergleichsweise stabile Vorvernetzungen mit einem ausreichenden Vernetzungsgrad ausbildet. Dies gilt insbesondere für ein Polyethertriamin, vorzugsweise ein Polyoxypropylentriamin, als Vorvernetzer, welche nicht nur kostengünstig sind, sondern sich auch durch gute Elastizität einer getrockneten sowie einer ausgehärteten Schmelzklebelackschicht auszeichnen können.

Ist eine Aminogruppe des Polyethertriamins an sekundären Kohlenstoffatomen endständiger Ethergruppen gebunden, kann eine sterische Hinderung auf den, die Aminogruppe tragenden Kohlenstoff, erreicht werden - womit die Reaktivität sowie der Vernetzungsgrad und somit das Volumen der Verbindung aus Vorvernetzer und Epoxidharz vorteilhaft einstellbar sind. Dies gilt weiter auch, wenn alle Aminogruppen des Polyethertriamins an sekundären Kohlenstoffatomen endständiger Ethergruppen gebunden sind.

Weist das das Epoxidharz oder die Epoxidharzmischung eine Bisphenol-A-Basis auf, kann eine besonders kostengünstige Schmelzklebelackschicht erhalten werden.

Eine einfache Herstellung bzw. weitere Handhabung der thermohärtbaren Schmelzklebelackschicht kann erreicht werden, wenn diese thermohärtbare Schmelzklebelackschicht einen bei Raumtemperatur latenten Härter auf Cyanamidbasis, insbesondere aus Dicyandiamid bestehend, aufweist.

Die genannten Vorteile sind besonders dann erreichbar, wenn die thermohärtbare wasserbasierte Schmelzklebelackschicht

> 35 bis 55 Gew.-%, insbesondere 40 bis 50 Gew.-%, eines Epoxidharzes oder einer Epoxidharzmischung mit einer mittleren molaren Masse von 1500 bis 2000 g/mol und
> 0,1 bis 2 Gew.-%, insbesondere 0,2 bis 1,0 Gew.-%, Triamin als Vorvernetzer mit einer mittleren molaren Masse von 350 bis 550 g/mol aufweist.

Vorteilhaft kann sich weiter herausstellen, wenn die thermohärtbare wasserbasierte Schmelzklebelackschicht 2 bis 10 Gew.-%, insbesondere 3 bis 8 Gew.-%, eines latenten Härters auf Cyanamidbasis, insbesondere Dicyandiamid, aufweist.

Vorzugsweise kann die thermohärtbare wasserbasierte Schmelzklebelackschicht als Rest Wasser sowie, insbesondere 4 bis 20 Gew.-%, Co-Löser, vorzugsweise 1-Methoxy-propanol als Co-Löser, aufweisen.

Die genannten Vorteile sind besonders dann erreichbar, wenn die thermohärtbare wasserbasierte Schmelzklebelackschicht

> 35 bis 55 Gew.-%, insbesondere 40 bis 50 Gew.-%, eines Epoxidharzes oder einer Epoxidharzmischung mit einer mittleren molaren Masse von 1500 bis 2000 g/mol und
> 0,1 bis 2 Gew.-%, insbesondere 0,2 bis 1,0 Gew.-%, Triamin als Vorvernetzer mit einer mittleren molaren Masse von 350 bis 550 g/mol,
> 2 bis 10 Gew.-%, insbesondere 3 bis 8 Gew.-%, eines latenten Härters auf Cyanamidbasis, insbesondere Dicyandiamid, und

als Rest Wasser sowie, insbesondere 4 bis 20 Gew.-%, Co-Löser, vorzugsweise 1-Methoxy-propanol als Co-Löser, aufweist.

Besonders auszeichnen kann sich ein Elektroband oder-blech, deren thermohärtbare Schmelzklebelackschicht getrocknet ist. Diese äußert sich anhand einer Erhöhung der Klebefestigkeit bzw. des Rollschälwiderstands.

Bezüglich der genannten Vorteile kann sich eine getrocknete thermohärtbare Schmelzklebelackschicht besonders auszeichnen, welche aufweist:

75 bis 92,8 Gew.-%, insbesondere 80 bis 90 Gew.-%, eines Epoxidharzes oder einer Epoxidharzmischung mit einer mittleren molaren Masse von 1500 bis 2000 g/mol,

7 bis 24,8 Gew.-%, insbesondere 4 bis 12 Gew.-%, Härter, insbesondere Dicyanamid,

0,2 bis 4 Gew.-%, insbesondere 0,4 bis 2 Gew.-%, Triamin als Vorvernetzer mit einer mittleren molaren Masse von 350 bis 550 g/mol.

Die Erfindung hat sich außerdem die Aufgabe gestellt, ein Verfahren zur Herstellung eines Blechpakets aus einem beschichteten Elektroband oder -blech zur Verfügung zu stellen, welches einfach durchzuführen ist und ein besonders sicheres Verkleben ermöglicht - ohne ein Ausfließen des Schmelzklebelacks während dem stoffschlüssigen Verbinden befürchten zu müssen.

Die Erfindung löst die Aufgabe hinsichtlich des Verfahrens anhand der Merkmale des Anspruchs 13.

Verfahrenstechnisch einfach kann die Herstellung eines erfindungsgemäß beschichteten Elektrobands oder -blechs erfolgen durch Aufbringen, insbesondere Rollenapplikation oder Aufsprühen, des thermohärtbaren wasserbasierten Schmelzklebelacklacks auf mindestens eine Flachseite des Elektrobands oder -blechs erfolgen.

Hierzu wird die Schmelzklebelackschicht des erfindungsgemäß beschichteten Elektrobands oder -blechs, insbesondere bei 180 bis 280 °C Bandtemperatur, getrocknet, werden Blechteile aus dem Elektroband oder -blech abgetrennt, die Blechteile zu einem Blechpaket gestapelt und das Blechpaket verklebt, insbesondere durch thermisches, bevorzugt bei 100°C bis 250°C, Aktivieren der Schmelzklebelackschicht.

Es hat sich herausgestellt, dass aufgrund der erfindungsgemäßen Vorvernetzung nicht nur keine Beeinträchtigung der Haftfestigkeit und der Klebefähigkeit der thermohärtbaren Schmelzklebelackschicht ergibt, sondern auch die Schmelzviskosität derart erhöht ist, dass sich deren unerwünschtes Ausfließen vermieden wird. Auch im Prozess des Erwärmens, also während der Aufheizphase kann eine kontrollierte Endvernetzung bzw. ein kontrolliertes Aushärten erreicht werden.

Aus dem genannten Verfahren erhaltene Blechpakete sind aufgrund der einfachen und sicheren Herstellung nicht nur kostengünstig, sie zeichnen sich auch durch besonders hohe Festigkeit und hervorragende magnetische Eigenschaften aus.

Insbesondere können sich jene Blechpakete aus einem beschichteten Elektroband oder -blech nach einem der Ansprüche 1 bis 12 auszeichnen, deren thermohärtbare Schmelzklebelackschicht nach einem der Verfahren nach Anspruch 13 oder 14 getrocknet und ausgehärtet ist.

Im Folgenden wird beispielhaft die Erfindung anhand einer Ausführungsvariante beschrieben.

Ausführungsbeispiel 1:

In einem bevorzugten Ausführungsbeispiel 1 ist ein Elektroband oder -blech mit einer thermohärtbaren wasserbasierten Schmelzklebelackschicht beschichtet, welche Schmelzklebelackschicht 100 Gramm aufweist:

50 Gramm eines Epoxidharzes mit einer mittleren molaren Masse von 2000 g/mol,
5,0 Gramm Dicyandiamid als latentem Härter,
1,0 Gramm Triamin als Vorvernetzer mit einer mittleren molaren Masse von 440 g/mol, nämlich einem Polyoxypropylentriamin der nachstehenden Strukturformel mit drei primären Aminogruppen auf, welche an sekundären Kohlenstoffatomen endständiger Ethergruppen gebunden sind,

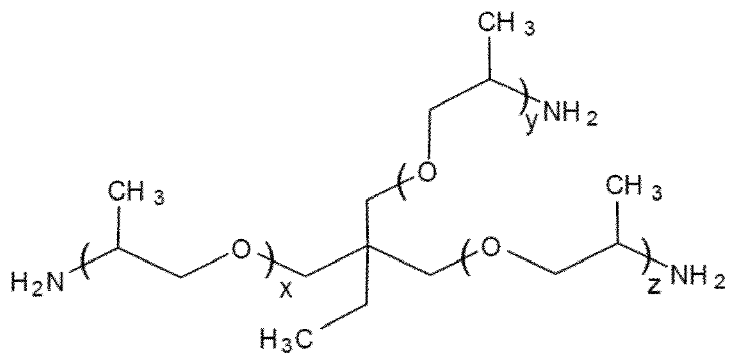

(x+y+z) = 5-6

10 Gramm 1-Methoxy-propanol als Co-Löser und
als Rest Wasser.

Weitere Zusatzstoffe und/oder Hilfsstoffe sind denkbar.

Zudem erfüllen die Gew.-% von Vorvernetzer und Epoxidharz oder Epoxidharzmischung in der thermohärtbaren Schmelzklebelackschicht die Relation:

$$\text{Gew.-\% Vorvernetzer} =$$

$$\frac{\text{Gew.} -\% \text{ Epoxidharz oder der Epoxidharzmischung}}{\text{mittlere M des Epoxidharzes oder der Epoxidharzmischung}} * \frac{\text{mittlere M des Vorvernetzers}}{X * \text{mittlere Anzahl der Aminogruppen der Vorvernetzermoleküle}}$$

wobei M für molare Masse steht. Für X ergibt sich im Ausführungsbeispiel 1 der Wert 3,67 - welcher Wert auch in den als besonders bevorzugt beanspruchten Bereich 2,9 bis 7,2 fällt.

Übliche Schichtdicken für Stahlbänder weisen eine Dicke von 4 µm bis 16 µm für den Nasslack auf, im getrockneten Zustand beträgt dies in etwa 2 µm bis 8 µm. Wobei etwa 10 g / $m^2$ / Bandseite für eine Schichtdicke von 5 µm im getrockneten Zustand entsprechen (also etwa 10 µm Nasslackdicke).

Durch diese Zusammensetzung kann ein besonderer Zustand der Schmelzklebelackschicht eingestellt werden. Die primären Aminogruppen des Triamins reagieren nämlich zumindest bei Raumtemperatur mit reaktiven Epoxidgruppen des Epoxidharzes zu sekundären und tertiären Aminen. Somit ergeben sich vergleichsweise voluminöse Verbindungen in der thermohärtbaren wasserbasierten Schmelzklebelackschicht bzw. führt dies zu einer Molmassenvergrößerung.

Das erfindungsgemäße Verhältnis von Aminogruppen und Epoxidgruppen ist zudem ideal, um einen Grad an Vorvernetzung zu erreichen, welcher weiträumig genug ist, ein Gelieren des wasserbasierten Schmelzklebelacks nicht zu verursachen.

Solch ein Schmelzklebelack verfügt bei Raumtemperatur über eine hohe Lagerstabilität, ohne dass dabei dessen Eigenschaften bezüglich Klebefähigkeit bzw. Haftfestigkeit auf dem Elektroband oder -blech beeinträchtigt werden. Beispielsweise kann damit eine Lagerfähigkeit von 6 Monaten problemlos ermöglicht werden. Demnach ist sohin eine einfache Handhabung der wasserbasierten thermohärtbaren Schmelzklebelacks gegeben.

Der Vorvernetzer des Ausführungsbeispiels 1 zeigt eine weitere vorteilhafte Eigenschaft, nämlich eine sterische Hinderung auf den, die Aminogruppe tragenden Kohlenstoff. Dies ergibt sich dadurch, dass die Aminogruppe des Polyethertriamins an einem sekundären Kohlenstoffatom einer endständigen Ethergruppe gebunden ist. Dies beeinflusst die Reaktivität der Aminogruppe. Insbesondere senkt es die Neigung einer sekundären Aminogruppe des Vorvernetzers - also einer Aminogruppe, welche bereit eine Verbindung mit einem Epoxidharzmolekül eingegangen ist - mit einem zweiten Epoxidharzmolekül zur Ausbildung einer tertiären Aminogruppe zu reagieren. Derart ist es also nicht nur der Grad der Vorvernetzung besonders leicht einstellbar, die Schmelzklebelackschicht ist auch vergleichsweise lagerstabil. Diese ist bei Raumtemperatur selbst über einen Zeitraum von sechs Monaten gegeben.

Überraschend hat sich auch gezeigt, dass eine besonders gute Haftfestigkeit der erfindungsgemäßen Schmelzklebelackschicht auf einem Elektroband oder -blech erreicht wird.

Die erfindungsgemäße Schmelzklebelackschicht auf dem Elektroband oder -blech wird bei einer Bandtemperatur von

220°C getrocknet - somit werden Wasser und Co-Löser, also 1-Methoxy-propanol, aus der Schmelzklebelackschicht ausgetrieben. Nach diesem Vorgang bildet sich die getrocknete thermohärtbare Schmelzklebelackschicht des Ausführungsbeispiels 1 aus

89 Gew.-% Epoxidharz
8,9 Gew.-% Dicyandiamid als latentem Härter und
2,1 Gew.-% Triamin als Vorvernetzer

Es ist davon auszugehen, dass die Aminogruppen des Vorvernetzers jeweils mit zumindest einer Epoxidgruppe unterschiedlicher Epoxidharzmoleküle des Epoxidharzes reagieren.
Erfindungsgemäß ist eine erhöhte Antrocknungsgeschwindigkeit der Schmelzklebelackschicht auf dem Elektroband oder -blech zu beobachten. Außerdem zeichnet sich diese getrocknete, thermohärtbare Schmelzklebelackschicht durch eine hohe Härte bei gleichzeitig sehr guter Elastizität aus. Die verbesserte Zähigkeit ist von besonders hoher Bedeutung - in Kombination mit der ausgezeichneten Haftfestigkeit der getrockneten thermohärtbaren Schmelzklebelackschicht auf dem Elektroband oder - blech ergeben sich maßgebliche Verbesserungen hinsichtlich des Rollschälwiderstands.
Zum Nachweis der Verbesserung des Rollschälwiderstands werden die Vergleichsergebnisse von 3 Proben gezeigt.

**Probe 1: Stand der Technik**

Die Zusammensetzung der thermohärtbaren Schmelzklebelackschicht von Probe 1 entspricht einem herkömmlichen kommerziell erhältlichen Backlack.

**Probe 2: Stand der Technik**

Die Zusammensetzung der thermohärtbaren Schmelzklebelackschicht von Probe 2 entspricht der dem erfindungsgemäßen Ausführungsbeispiel 1 (Probe 3) allerdings ohne Zugabe des Vorvernetzers.

**Probe 3: Ausführungsbeispiel 1**

Die Zusammensetzung der thermohärtbaren Schmelzklebelackschicht entspricht jener des erfindungsgemäßen Ausführungsbeispiels 1. Dieses wurde in einer Schichtdicke von 5 µm auf ein siliziumlegiertes (etwa 3 % Si) Elektroband per Rollenapplikation aufgetragen und einem Trocknen bei einer Bandtemperatur (PMT - Peak Metal Temperature) von 220°C unterworfen.
Zur Bestimmung des Rollschälwiderstands wurde das Verfahren nach der Norm EN 1464 angewandt.
Für Probe 3 ist nach Tabelle 1 eine klare Erhöhung des Rollschälwiderstands erkennbar.

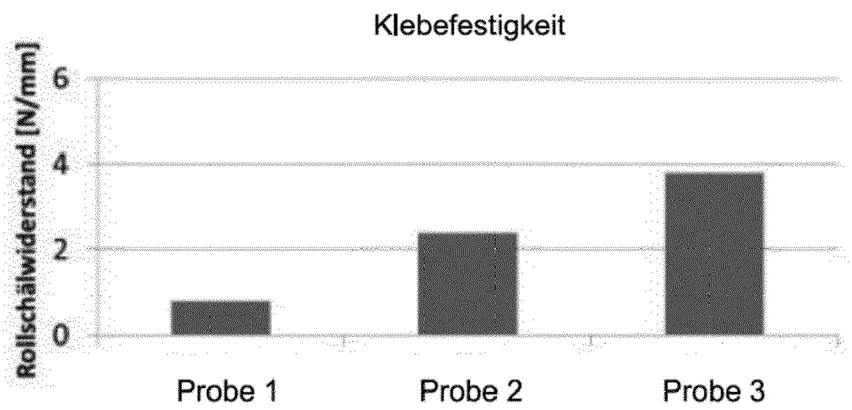


Tabelle 1

Ein besonderer erfindungsgemäßer Vorteil liegt in der Einstellbarkeit der Schmelzviskosität der getrockneten thermohärtbaren Schmelzklebelackschicht beim Aushärten. Dies wird insbesondere aufgrund der speziellen Vorvernetzung durch die erfindungsgemäße Relation der Gew.-% von Vorvernetzer und Epoxidharz in der thermohärtbaren Schmelzklebelackschicht erreicht. Damit kann die Gefahr des Ausfließens von Schmelzklebelack im Backprozess stoffschlüssig zu verbindender, mit Schmelzklebelack beschichteter Elektrobänder oder -bleche bzw. aus solchen hergestellter Blechteile reduziert werden.

Dies gelingt ohne nachteilige Beeinflussung hinsichtlich der Stabilität und Dispersion bzw. der Handhabung des Schmelzklebelacks, z. B. beim Aufbringen der Schmelzklebelackschicht. Überraschend ist dies unter anderem deshalb, weil -trotz eines weiteren, wenn auch bei Raumtemperatur latenten, Härters- mithilfe eines Vorvernetzers, welcher sich bei Raumtemperatur mit Harz verbindet, dennoch eine hohe Lagerstabilität bei Raumtemperatur gewährleistet bleibt und sich auch keinen negativen Effekte durch das Trocken der thermohärtbaren Schmelzklebelackschicht auf dem Elektroband oder -blech bezüglich der weiteren Verwendung ergeben.

Bereits -gegenüber den erfindungsgemäßen Grenzen- geringfügig erhöhte Gew.-% des Vorvernetzers führen nicht nur zu einer massiven Verschlechterung der Lagerstabilität des thermohärtbaren wasserbasierten Schmelzklebelacks, sondern erhöhen die Schmelzviskosität der getrockneten thermohärtbaren Schmelzklebelackschicht auf dem Elektroband oder -blech in einem Ausmaß, welches seine Klebekraft in einem inakzeptablen Ausmaß verschlechtert.

## Patentansprüche

1. Elektroband oder -blech mit wenigstens einer auf einer seiner Flachseiten vorgesehenen, thermohärtbaren wasserbasierten Schmelzklebelackschicht, welche ein Epoxidharz oder eine Epoxidharzmischung und mindestens einen Härter aufweist, **dadurch gekennzeichnet, dass** die thermohärtbare wasserbasierte Schmelzklebelackschicht zusätzlich einen mit dem Epoxidharz oder der Epoxidharzmischung verbindenden Vorvernetzer aufweist, wobei der Vorvernetzer ein organisches Amin mit mindestens drei Aminogruppen oder eine Mischung solcher organischer Amine ist.

2. Elektroband oder -blech nach Anspruch 1, **dadurch gekennzeichnet, dass** die mindestens drei Aminogruppen des Vorvernetzers jeweils primäre Aminogruppen sind.

3. Elektroband oder -blech nach Anspruch 1 oder 2, **dadurch gekennzeichnet, dass** die Gew.-% von Vorvernetzer und Epoxidharz oder Epoxidharzmischung in der wasserbasierten thermohärtbaren Schmelzklebelackschicht folgende Relation erfüllen:

$$\text{Gew.-\% Vorvernetzer} =$$

$$\frac{\begin{array}{c}\text{Gew. \% Epoxidharz oder}\\ \text{der Epoxidharzmischung}\end{array}}{\begin{array}{c}\text{mittlere M des Epoxidharzes oder}\\ \text{der Epoxidharzmischung}\end{array}} * \frac{\text{mittlere M des Vorvernetzers}}{\begin{array}{c}X * \text{mittlere Anzahl der Aminogruppen der}\\ \text{Vorvernetzermoleküle}\end{array}}$$

wobei

X für eine Zahl von 1,6 bis 28,9, insbesondere 2,1 bis 19,4, insbesondere 2,9 bis 7,2, und
M für molare Masse steht.

4. Elektroband oder -blech nach Anspruch 1, 2 oder 3, **dadurch gekennzeichnet, dass** der Vorvernetzer ein organisches Triamin, insbesondere ein Polyethertriamin, vorzugsweise ein Polyoxypropylentriamin, ist.

5. Elektroband oder -blech nach Anspruch 4, **dadurch gekennzeichnet, dass** eine, insbesondere alle, Aminogruppen des Polyethertriamins an sekundären Kohlenstoffatomen endständiger Ethergruppen gebunden sind.

6. Elektroband oder -blech nach einem der Ansprüche 1 bis 5, **dadurch gekennzeichnet, dass** das Epoxidharz oder die Epoxidharzmischung eine Bisphenol-A-Basis aufweist.

7. Elektroband oder -blech nach einem der Ansprüche 1 bis 6, **dadurch gekennzeichnet, dass** die thermohärtbare Schmelzklebelackschicht einen bei Raumtemperatur latenten Härter auf Cyanamidbasis, insbesondere aus Dicyandiamid bestehend, aufweist.

8. Elektroband oder -blech nach einem der Ansprüche 1 bis 7, **dadurch gekennzeichnet, dass** die thermohärtbare wasserbasierte Schmelzklebelackschicht
35 bis 55 Gew.-%, insbesondere 40 bis 50 Gew.-%, eines Epoxidharzes oder
einer Epoxidharzmischung mit einer mittleren molaren Masse von 1500 bis 2000 g/mol und
0,1 bis 2 Gew.-%, insbesondere 0,2 bis 1,0 Gew.-%, Triamin als Vorvernetzer mit einer mittleren molaren Masse von 350 bis 550 g/mol aufweist.

9. Elektroband oder -blech nach Anspruch 8, **dadurch gekennzeichnet, dass** die thermohärtbare wasserbasierte Schmelzklebelackschicht
2 bis 10 Gew.-%, insbesondere 3 bis 8 Gew.-%, eines latenten Härters auf Cyanamidbasis, insbesondere Dicyandiamid, aufweist.

10. Elektroband oder -blech nach Anspruch 8 oder 9, **dadurch gekennzeichnet, dass** die thermohärtbare wasserbasierte Schmelzklebelackschicht als Rest Wasser sowie, insbesondere 4 bis 20 Gew.-%, Co-Löser, vorzugsweise 1-Methoxy-propanol als Co-Löser, aufweist.

11. Elektroband oder -blech nach einem der vorangegangenen Ansprüche, deren thermohärtbare Schmelzklebelackschicht getrocknet ist.

12. Elektroband oder -blech nach Anspruch 11, **dadurch gekennzeichnet, dass** die getrocknete thermohärtbare Schmelzklebelackschicht aufweist:

    75 bis 92,8 Gew.-%, insbesondere 80 bis 90 Gew.-%, eines Epoxidharzes oder einer Epoxidharzmischung mit einer mittleren molaren Masse von 1500 bis 2000 g/mol,
    7 bis 24,8 Gew.-%, insbesondere 4 bis 12 Gew.-%, Härter, insbesondere Dicyanamid,
    0,2 bis 4 Gew.-%, insbesondere 0,4 bis 2 Gew.-%, Triamin als Vorvernetzer mit einer mittleren molaren Masse von 350 bis 550 g/mol.

13. Verfahren zur Herstellung eines beschichteten Elektrobands oder -blechs nach einem der vorangegangenen Ansprüche, durch Aufbringen, insbesondere Rollenapplikation oder Aufsprühen, des thermohärtbaren wasserbasierten Schmelzklebelacklacks auf mindestens eine Flachseite des Elektrobands oder -blechs.

14. Verfahren zur Herstellung eines Blechpakets mit einem beschichteten Elektroband oder -blech nach Anspruch 13, umfassend
Trocknung der Schmelzklebelackschicht, insbesondere bei 180 bis 280°C Bandtemperatur,
Abtrennen von Blechteilen aus dem Elektroband oder -blech,
Stapeln der Blechteile zu einem Blechpaket,
Verkleben des Blechpakets, insbesondere durch thermisches Aktivieren der Schmelzklebelackschicht, bevorzugt bei 100°C bis 250°C.

15. Blechpaket, hergestellt nach einem Verfahren nach Anspruchs 14.

16. Blechpaket aus einem beschichteten Elektroband oder -blech nach einem der Ansprüche 1 bis 12, deren thermohärtbare Schmelzklebelackschicht nach einem der Verfahren nach Anspruch 13 oder 14 getrocknet und ausgehärtet ist.

Europäisches Patentamt
European Patent Office
Office européen des brevets

# EUROPÄISCHER RECHERCHENBERICHT

Nummer der Anmeldung
EP 18 17 3378

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2014/089593 A1 (VOESTALPINE STAHL GMBH [AT]) 19. Juni 2014 (2014-06-19) * Seite 8, Absatz 2; Ansprüche 1-6, 13, 171-9 * | 1,2,4,5, 13-16 | INV. B32B7/12 B32B15/08 B32B15/092 B32B15/18 B32B27/26 B32B27/38 B32B37/06 B32B37/12 B32B37/18 H01F1/18 H01F3/02 H01F41/02 H02K1/04 H02K15/12 |
| X | WO 2012/059588 A1 (VOESTALPINE STAHL GMBH [AT]; PERUZZI MARTIN [AT]; FLUCH RONALD [AT]; S) 10. Mai 2012 (2012-05-10) * Seite 10, Zeile 10 * | 13 | |

RECHERCHIERTE SACHGEBIETE (IPC)

B32B
H01F
H02K

Der vorliegende Recherchenbericht wurde für alle Patentansprüche erstellt

2

| Recherchenort | Abschlußdatum der Recherche | Prüfer |
|---|---|---|
| Den Haag | 19. November 2018 | Derz, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 17 3378

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-11-2018

| Im Recherchenbericht angeführtes Patentdokument | Datum der Veröffentlichung | Mitglied(er) der Patentfamilie | Datum der Veröffentlichung |
|---|---|---|---|
| WO 2014089593 A1 | 19-06-2014 | AT 512931 A4 | 15-12-2013 |
| | | CN 104884244 A | 02-09-2015 |
| | | EP 2931520 A1 | 21-10-2015 |
| | | JP 2016506313 A | 03-03-2016 |
| | | KR 20150095700 A | 21-08-2015 |
| | | US 2015314563 A1 | 05-11-2015 |
| | | WO 2014089593 A1 | 19-06-2014 |
| WO 2012059588 A1 | 10-05-2012 | DE 202011110777 U1 | 28-04-2016 |
| | | EP 2450189 A1 | 09-05-2012 |
| | | EP 2635438 A1 | 11-09-2013 |
| | | JP 6078852 B2 | 15-02-2017 |
| | | JP 2013544298 A | 12-12-2013 |
| | | KR 20140001895 A | 07-01-2014 |
| | | MX 341903 B | 06-09-2016 |
| | | RU 2013125776 A | 10-12-2014 |
| | | US 2013248100 A1 | 26-09-2013 |
| | | WO 2012059588 A1 | 10-05-2012 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014089593 A1